# EUROPEAN PATENT APPLICATION

(11) **EP 1 460 291 A1**
(43) Date of publication of application: **22.09.2004**
(21) Application number: 02790821.9
(22) Date of filing: 19.12.2002
(51) Int. Cl.: F16C 13/00, B29C 67/24

(54) **FIBER-REINFORCED RESIN ROLL AND METHOD OF MANUFACTURING THE ROLL**

(30) Priority: 26.12.2001 JP 2001393456
(71) Applicant: Yamauchi Corporation, Hirakata-shi, Osaka 573-1132 (JP)
(72) Inventor: MURAKAMI, Tetsuya, c/o YAMAUCHI CORPORATION, Hirakata-shi, Osaka 573-1132 (JP); WATANABE, Atsuo, c/o YAMAUCHI CORPORATION, Hirakata-shi, Osaka 573-1132 (JP)
(74) Representative: Müller - Hoffmann & Partner
(86) International application number: PCT/JP2002/013348
(87) International publication number: WO 2003/056195

(57) **Abstract**

A fiber-reinforced resin roll (1) comprises a roll core (2) and a covering layer (4) formed around a periphery of the roll core (2) through an under winding layer (3) interposed therebetween. The covering layer (4) contains a fiber material (6) mainly composed of inorganic fibers. The fiber material (6) is uniformly dispersed in the covering layer (4). The covering layer (4) is formed by impregnating a tape-shaped nonwoven fiber complex in which the fiber material (6) is coupled by a binder, with a liquid thermosetting resin material and winding the impregnated fiber complex around the under winding layer (3).

## Description

### Technical Field

The present invention relates to a fiber-reinforced resin roll used in various kinds of industries such as paper manufacturing, iron manufacturing, a film, fibers or the like and its manufacturing method and more particularly, to a large-scaled and hard fiber-reinforced resin roll used as a calender roll for manufacturing paper, a press roll for manufacturing paper, a calender roll for fibers, a calender roll for manufacturing a magnetic record medium or the like.

### Background Art

A method of manufacturing a large-scaled and hard fiber-reinforced resin roll by impregnating a nonwoven fabric with a thermosetting resin material while the tape-shaped nonwoven fabric is sequentially transferred, winding it around a roll core and hardening it is well known (Japanese Patent Publication No.59-25886, Japanese Patent Laying-Open No.61-144422, Japanese Patent Laying-Open No.49-55905, and Japanese Patent Laying-Open No.47-10159).

The fiber-reinforced resin roll which has been in practical use is mostly manufactured by impregnating a nonwoven cloth composed of organic fivers such as polyamide, polyester or the like with a thermosetting resin and winding it around an outer periphery of a roll core. A filler of inorganic powder is mixed in the thermosetting resin in some cases. However, the roll using the nonwoven fabric of the organic fibers is likely to be damaged on its surface and there was a limit in increasing the strength of the surface.

Japanese Patent Publication No. 59-25886 discloses a hard roll which is manufactured by forming a fiber-reinforced layer on a periphery of a roll core, forming an nonwoven fabric layer impregnated with a mixture of the thermosetting resin and fine inorganic powder around the periphery of the reinforced layer and integrating the fiber-reinforced layer with the roll core and the nonwoven layer.

As fibers for constituting the nonwoven fabric layer, although there are organic fibers and inorganic fibers, only the organic fibers are specifically used in description of an embodiment and a method of manufacturing the hard roll using the nonwoven fabric of the inorganic fibers was not concretely shown therein. As described above, the roll using the nonwoven fabric of the organic fibers is likely to be damaged on its surface and there was a limit in increasing the strength of the surface.

Meanwhile, the nonwoven fabric of the inorganic fibers is not flexible in general as compared with the nonwoven fabric of the organic fibers and the fibers are likely to be unbound by tensile force. Thus, it was very difficult to wind it around the outer periphery of the roll core.

In addition, Japanese National Publication of International Application No. 2001-505262 discloses a manufacturing method of a roll for a paper machine in which several layers of the fibers impregnated with a thermoplastic resin are wound around a roll body. As a fiber material, the inorganic fiber such as glass fibers, carbon fibers, ceramic fibers or the like are shown.

According to the manufacturing of the roll for the paper machine, a continuing fiber mat is impregnated with the thermoplastic resin by an extruder, the roll body is covered with the impregnated band and the band is heated just before it is applied to a roll surface.

However, in this method, since the resin to be used is the thermoplastic resin, even when the band impregnated with the resin is heated just before it is applied onto the roll, the viscosity of the thermoplastic resin which is a high polymer is lowered to some extent but the thermoplastic resin will not become liquid and can not to be fully impregnated in the fiber material.

Therefore, the following problems arise. That is, since the fiber material is not fully impregnated with the thermoplastic resin, it is difficult to fully fuse the material between the bands to form the roll. Even if the roll is formed, the roll has a structure in which the fiber material is multilayered and an uniform roll can not be provided.

Furthermore, since the fiber material is not fully impregnated with the thermoplastic resin, air existing in the fiber material can not be wholly excluded by impregnation of the resin. As a result, the accomplished roll contains the air inside. If the inside of the roll is not uniform or the roll contains the air, a quality of the roll deteriorates and the roll could be damaged when used.

Even when the thermosetting resin is used, it is necessary to select a liquid thermosetting resin material having relatively high viscosity to be impregnated in order to manufacture a roll which has preferable strength. When the viscosity of the resin is high, it is difficult to exclude the air and sufficiently impregnate a tape-shaped fiber complex with the resin.

Especially, when the hard fiber-reinforced resin roll is manufactured, it is preferable to mix an inorganic filler. However, if the inorganic filler is mixed, the viscosity of the resin is further increased and it becomes further difficult to impregnate the tape-shaped fiber complex with the resin. If the tape-shaped fiber complex is not fully impregnated with the resin, the formed roll contains air inside and it could be damaged when used.

### Disclosure of Invention

Thus, the present invention was made in order to solve the above problems and it is an object of the present invention to provide a fiber-reinforced resin roll in which a surface has a preferable strength and a flaw or a crack is not likely to occur.

It is another object of the present invention to provide a fiber-reinforced resin roll in which a fiber material is uniformly dispersed in a covering layer and air is not contained.

It is a further object of the present invention to provide a method of manufacturing a fiber-reinforced resin roll in which inorganic fibers impregnated with a liquid thermosetting resin material can be easily wound around an outer periphery of a roll core.

It is still another object of the present invention to provide a method of manufacturing a fiber-reinforced resin roll in which a nonwoven fiber complex to be wound around the roll core can be fully impregnated with the liquid thermosetting resin material.

The fiber-reinforced resin roll according to the present invention comprises a roll core and a covering layer formed around an outer periphery of the roll core directly or through an under winding layer interposed therebetween and formed of a thermosetting resin containing a fiber material mainly composed of inorganic fibers. The fiber material is uniformly dispersed in the covering layer. Here, "uniformly" means that the fiber material is dispersed almost evenly in the layer in the thickness direction.

As described above, since the fiber material is mostly composed of the inorganic fibers and the fiber material is uniformly dispersed in the covering layer, the strength of the roll surface can be improved and there can be provided the fiber-reinforced resin roll in which the flaw or the crack is not likely to occur.

The density of the fiber material in the covering layer is preferably 2wt% or more and 40wt% or less. More preferably, it is 5wt% or more and 20wt% or less.

Thus, when the density of the fiber material in the covering layer is 2wt% or more and 40wt% or less, there can be provided the fiber-reinforced resin roll in which its surface strength is superior and the flaw or the crack is not likely to occur. If the density of the fiber material is lower than the above range, an reinforced effect by the fiber material is not expected so much. Meanwhile, if the density of the fiber material is higher than the above range, it is difficult to form the resin layer in which the thermosetting resin is fully impregnated and air is not contained.

Furthermore, the length of the fiber material preferably ranges from 3mm to 50mm in order to obtain the fiber-reinforced resin roll in which the fiber material is uniformly dispersed in the covering layer, its surface strength is superior and the flaw or the crack is not likely to occur.

According to one embodiment of the present invention, the covering layer is formed by winding around the roll core a tape-shaped nonwoven fibers complex in which a fiber material mainly composed of the inorganic fiber is coupled by a binder, impregnated with the thermosetting resin material.

As described above, since the tape-shaped nonwoven fiber complex in which the fiber material mainly composed of the inorganic fibers is coupled by the binder is used, although the inorganic fibers are used, the nonwoven fiber complex impregnated with the thermosetting resin has sufficient tensile strength when it is wound around the outer periphery of the roll core, whereby the winding operation becomes easy. As a result, there is provided the fiber-reinforced resin roll in which the inorganic fibers can be uniformly dispersed in the covering layer formed of the thermosetting resin, its strength is superior and the flaw or the crack is not likely to occur.

A manufacturing method of the fiber-reinforced resin roll according to the present invention comprises a step of impregnating the tape-shaped nonwoven fiber complex containing the fiber material with the liquid thermosetting resin material while the nonwoven fiber complex is sequentially transferred, a step of winding the nonwoven fiber complex around an outer periphery of the roll core directly or through the lower winding layer interposed therebetween, and a step of hardening the thermosetting resin material. Preferably, the fiber material mainly contains the inorganic fibers.

Since the nonwoven fiber complex is wound around the periphery of the roll core in a state where the nonwoven fiber complex is impregnated with the liquid thermosetting resin material, the roll manufactured by this method has a structure in which the fiber material mainly composed of the inorganic fibers is uniformly dispersed in the thermosetting resin. As a result, its strength is superior and the flaw or the crack is not likely to occur. In addition, since the fiber material is coupled by the binder, although the inorganic fibers are used, the nonwoven fiber complex has a sufficient tensile strength also when it is wound around the roll core. Thus, the winding operation of the nonwoven fiber complex becomes easy.

It is preferable to further comprise a step of lowering the viscosity of the thermosetting resin impregnated in the nonwoven fiber complex while the nonwoven fiber complex impregnated with the thermosetting resin material is transferred and/or while it is wound around the roll core. More specifically, the viscosity of the liquid thermosetting resin material is about 1500mPa · s to 4000mPa · s when it is impregnated in the nonwoven fiber complex. Meanwhile, it is to be lowered to 300mPa · s to 1000mPa · s while the nonwoven fiber complex is transferred and/or while it is wound around the roll core.

Thus, when the viscosity of the thermosetting resin material impregnated in the nonwoven fiber complex is lowered, flow of the thermosetting resin material is enhanced. Consequently, penetration of the resin into the nonwoven fiber complex is improved and the resin is filled in the fibers of the nonwoven fiber complex while air can be excluded from the nonwoven fiber complex.

Especially, since the nonwoven fiber complex is formed by coupling the fiber material mainly composed of the inorganic fibers by a binder, it has the sufficient tensile strength when it is wound around the roll core. Therefore, by a synergy effect of tightening force at the time of winding and liquidation of the thermosetting resin material caused by decrease in viscosity, the air can be effectively excluded from the nonwoven fiber complex and the nonwoven fiber complex can be completely filled with the thermosetting resin. As a result, the accomplished roll has no longer a multilayer structure of the nonwoven fiber complex but there is provided the roll in which the fiber material is uniformly dispersed in the covering layer and air is not contained inside.

As means for lowering the viscosity of the thermosetting resin material impregnated in the nonwoven fiber complex, there is a method of heating the nonwoven fiber complex. The nonwoven fiber complex can be heated up by a hot-blast equipment or a heater. The viscosity of the thermosetting resin material may be lowered by a method other than heating.

In case of lowering the viscosity of the thermosetting resin material by heating, if the thermosetting resin material proceeds its reaction before the winding operation of the nonwoven fiber complex is finished, the air can not be excluded from the nonwoven fiber complex any more. Therefore, it is preferable that the nonwoven fiber complex is impregnated with the liquid thermosetting resin material by heating at high temperature and then, immediately the temperature is to be lowered. In this respect, it is preferable that the heating means is set at least one place where the nonwoven fiber complex is transferred and where it is wound around the roll core locally and it heats the nonwoven fiber complex impregnated with the liquid thermosetting resin material instantaneously when it passes through. Since the inorganic fibers constituting the nonwoven fiber complex shows heat resistance higher than that of the organic fibers, it will not be damaged by heat of the heating means. Therefore, the reinforcement effect of the' resin roll caused by the fiber material is preferable.

Impregnation of the thermosetting resin material into the nonwoven fiber complex can be promoted as described above, by lowering the viscosity of the thermosetting resin material impregnated in the nonwoven fiber complex while the nonwoven fiber complex is transferred and/or while it is wound around the roll core and the air existing in the nonwoven fiber complex can be excluded, and the nonwoven fiber complex can be fully impregnated with the thermosetting resin material together with the tightening force at the time of being wound around the roll core. As a result, the accomplished roll has no longer a multilayer structure of the nonwoven fiber complex but there is provided the roll in which the fiber material is uniformly dispersed in the covering layer and air is not contained inside. In this case also, as means for lowering the viscosity of the thermosetting resin material impregnated in the nonwoven fiber complex, there is a method of heating the nonwoven fiber complex. Here, the fiber material may be either the organic fibers or the inorganic fibers.

Preferably, by lowering the viscosity of the resin material a plurality of times or at a plurality of places, the air can be effectively excluded from the nonwoven fiber complex and the nonwoven fiber complex can be fully impregnated with the thermosetting resin.

The nonwoven fiber complex preferably has tensile strength of 50N/15mm or more in the longitudinal direction.

If the nonwoven fiber complex has the tensile strength of 50N/15mm or more in the longitudinal direction, the tape composed of the nonwoven fiber complexes has sufficient tensile strength when wound around the roll core. Therefore, the winding operation becomes easy. Meanwhile, if the tensile strength in the longitudinal direction of the tape composed of the nonwoven fiber complexes is lower than the above, the fibers constituting the tape is likely to be unbound or the tape is broken by the tension when wound around the periphery of the roll core, so that winding operation becomes difficult.

Furthermore, the nonwoven fiber complex preferably has basic weight of 30g/m² to 100g/m².

If the basic weight of the nonwoven fiber complex is less than 30g/m², the strength of the tape composed of the nonwoven fiber complexes becomes small and the tape could be broken by the tension when wound around periphery of the roll core. In addition, if the basic weight of the nonwoven fiber complex is small, the tape is thin. In this case, it is necessary to wind the tape many times to form a predetermined thickness of the covering layer formed of the nonwoven fiber complex impregnated with the thermosetting resin material, which is troublesome. Meanwhile, if the basic weight of the nonwoven fiber complex exceeds 100g/m², since the tape becomes thick, it is not likely to be uniformly wound and it is difficult to form a uniform roll.

Preferably, the nonwoven fiber complex does not contain a nonuniformity component such as a reinforcing yarn or compulsory tangle caused by a needle punch. In this respect, the nonwoven fiber complex preferably uses paper made of the fiber material. Thus, there can be provided a roll having a uniform surface.

Besides, if the paper made of the fiber material is used as the nonwoven fiber complex, since the accomplished fiber-reinforced resin roll has a structure in which the fiber material is oriented in the surface direction (a peripheral direction or an axial direction) of the roll, a meritorious effect is brought about that the crack is prevented from occuring.

As the inorganic fibers constituting the nonwoven fiber complex, there are glass fibers, carbon fibers, ceramic fibers, metal fibers or the like. Among them, the glass fibers are preferably used in view of costs. Although one kind of inorganic fibers is independently used in general, two or more kinds of inorganic fibers may be mixed and used. For example, it is contemplated that the glass fibers and the carbon fibers are mixed to prevent electrification of the roll.

Although the kind of the binder for coupling the fiber material of the nonwoven fiber complex is not especially limited, the epoxy resin, polyvinyl alcohol and the like are common. Especially, if the thermosetting resin material impregnated in the nonwoven fiber complex and the binder for coupling the fiber material are formed of the same material, there can be provided the fiber-reinforced resin roll which is excellent in surface properties, running characteristics or the like without damaging the properties of the thermosetting resin material. In this respect, both thermosetting resin material and binder are preferably formed of an epoxy resin group material.

As the thermosetting resin according to the present invention, a mixture of the thermosetting resin and the inorganic filler is preferably used.

If the fiber-reinforced resin roll contains the inorganic filler in addition to the inorganic fibers of the nonwoven fiber complex, there can be provided the roll in which the strength is further improved and the flaw or the crack is not likely to occur.

As the inorganic filler, there are powder such as silica powder, quarts, glass, clay, calcium carbonate, carbon, ceramics or the like, beads, short fibers, a whisker or the like. Only one kind of inorganic filler may be used or two or more kinds are mixed and used. Among them, in view of improvement of the properties of the roll such as abrasion resistance, vulnerability resistance, compressive strength or the like and costs, the silica powder is preferably used.

In addition, if an electroconductive filler such as the carbon is mixed, it is possible that the electrification of the roll can be prevented. If the inorganic fibers are glass fibers and the inorganic filler is the silica powder, there can be provided the roll in which the strength is especially superior and the flaw or the crack is not likely to occur.

As the thermosetting resin material impregnated in the nonwoven fiber complex, there are an epoxy resin, a polyester resin, a polyimide resin, an urethan resin or the like. Among them, the epoxy resin is preferable. If the epoxy resin is used, there can be provided the roll in which the strength is excellent and the flaw or the crack is not likely to occur.

According to the fiber-reinforced resin roll of the present invention, it is preferable that the fiber material contained in the covering layer is oriented in the surface direction (the peripheral direction or the axial direction) of the resin roll. If the fiber material is oriented in a radial direction of the resin roll, compressive elasticity modulus of the resin roll is unnecessarily increased. As a result, as elastic deformation at the time of nipping will not work, it is not preferable in view of roll characteristics. When the fiber material is oriented in the surface direction of the resin roll, such deterioration of the characteristics can be prevented and the crack in the resin roll can be prevented from generating.

According to the fiber-reinforced resin roll of the present invention, a thickness of the covering layer or a total thickness of the under winding layer and the covering layer if the under winding layer is provided is preferably 3mm to 15mm. If the thickness of the covering layer or the total thickness of the under winding layer and the covering layer is less than 3mm, a sufficient nip width could not be obtained. It is not preferable that the thickness of the under winding layer or the total thickness of the under winding layer and the covering layer exceeds 15mm, since the crack is likely to occur in the covering layer.

According to the roll core of the fiber-reinforced resin roll of the present invention, other than the normal roll core, there is a roll core comprising heating and/or cooling means by which heating or cooling operation can be performed from the inside.

If the roll core comprising the heating and/or cooling means is used, when the fiber-reinforced resin roll is especially used as a calender roll, the processing performance of a Web material as a processing object can be improved. Since the inorganic fibers have good heat conductance as compared with the organic fibers, if the roll core which can be heated and/or cooled from the inside is used, it is more effective when the nonwoven fiber complex used in the covering layer is formed of the inorganic fibers as in the present invention.

In this case, if the carbon fibers or the metal fibers are used as the inorganic fibers, further higher heat conductance is provided and the fiber-reinforced resin roll can be effectively heated up and/or cooled down. In addition, if the roll core which can be heated and/or cooled from the inside is used, the thinner the covering layer is, the higher the heat conductance becomes. Therefore, in this case, the thickness of the covering layer or the total thickness of the under winding layer and the covering layer is preferably 3mm to 15mm and more preferably 3mm to 10mm. The heating and/or cooling operation from the inside of the roll core is performed by water, oil, vapor, electromagnetic induction or the like. In this case, the fiber-reinforced resin roll can be heated and/or cooled in a range of at 10°C to 150°C.

According to the covering layer of the fiber-reinforced resin roll of the present invention, its glass-transition temperature is preferably 120°C to 200°C. If the grass-transition temperature (Tg) of the covering layer is lower than 120°C, endurance and heat resistance of the fiber-reinforced resin roll could be lowered. Alternatively, if the grass-transition temperature (Tg) of the covering layer exceeds 200°C, the crack is likely to occur in the fiber-reinforced resin roll at the time of cooling down.

### Brief Description of Drawings

Fig. 1 is a sectional view showing a vertical section of a fiber-reinforced resin roll according to a first embodiment of the present invention.
Fig. 2 is a sectional view showing a transverse section of the fiber-reinforced resin roll according to the first embodiment of the present invention, which is taken along line II-II in Fig. 1.
Fig. 3A and Fig. 3B are partially enlarged views showing a frame format of the fiber-reinforced resin roll according to the first embodiment of the present invention.
Fig. 4 is a conceptual view for explaining a manufacturing method of the fiber-reinforced resin roll according to the present invention.
Fig. 5 is a sectional view showing a vertical section of a fiber-reinforced resin roll according to a second embodiment of the present invention.

### Best Mode for Carrying Out the Invention

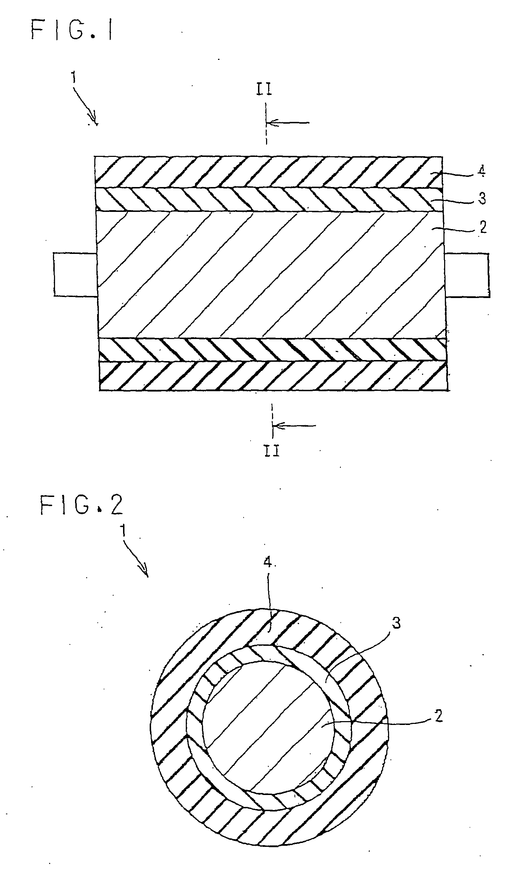

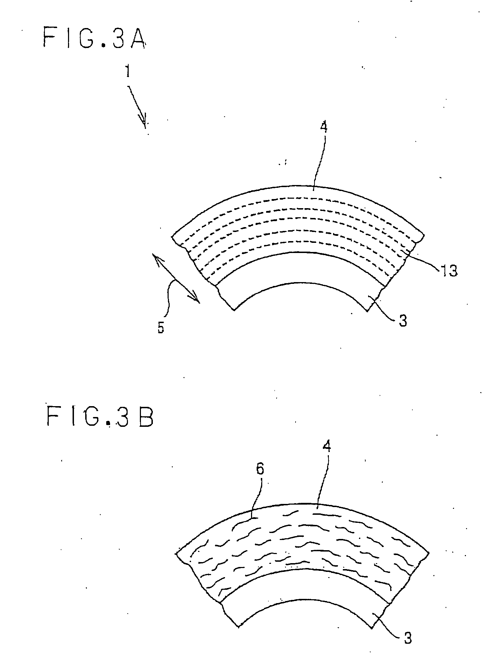

Hereinafter, an embodiment of the present invention will be described with reference to Figs. 1 to 5. Figs. 1 and 2 are sectional views showing a fiber-reinforced resin roll 1 according to a first embodiment of the present invention. Fig. 3A and Fig. 3B are partially enlarged schematic views of the fiber-reinforced resin roll 1. As shown in Figs. 1 and 2, the fiber-reinforced resin roll 1 comprises a roll core 2, a fiber-reinforced under winding layer 3 and a covering layer 4.

The roll core 2 is made of iron and 2370mm in length and 415mm in diameter, for example. The under winding layer 3 is formed around a periphery of the roll core 2 to improve a strength of the fiber-reinforced resin roll 1.

The under winding layer 3 is about 3mm in thickness, for example, whose constitution is well known in Japanese Patent Publication No. 59-25886 and it can be formed of reinforced fibers impregnated with a thermosetting resin or a mixture of that and an inorganic powder. As the reinforced fibers of the under winding layer 3, an inorganic or organic roving, a woven fabric, a nonwoven fabric are used independently or those may be combined. When use conditions of the fiber-reinforced resin roll 1 are relatively moderate, the under winding layer 3 may be omitted.

The covering layer 4 is about 7mm in thickness, for example and formed by winding a tape-shaped nonwoven fiber complex in which a fiber material mainly composed of inorganic fibers such as glass fibers is combined by a binder, around the under winding layer 3.

A ratio of thickness of the covering layer 4 to the under winding layer 3 is preferably 1/9 to 9/1. Furthermore, a total thickness of the under winding layer 3 and the covering layer 4 is preferably 3mm or more. If the total thickness of the under winding layer 3 and the covering layer 4 is less than 3mm, when the fiber-reinforced resin roll and a metal roll are opposed and load is applied thereto, an optimal nip width can not be obtained.

More specifically, as will be described later, the covering layer 4 is formed by winding the nonwoven fiber complex impregnated with a liquid thermosetting resin material around the outer periphery of the roll core 2 and then, hardening the resin.

As shown in Fig. 3A, although the covering layer 4 is formed by laminating a plurality of nonwoven fiber complexes in a state being filled with the resin, the hardened resin roll does not have a multilayer structure and fiber material 6 is uniformly dispersed in the covering layer 4 as shown in Fig. 3B.

Besides, an extending direction (longitudinal direction of each fiber) of the fiber material in the covering layer 4 according to the present invention is preferably a peripheral direction or an axial direction of the resin roll 1. If the fiber material is oriented in a radial direction of the resin roll 1, the fibers will be in a state where as if fibers stand, which needlessly increases compressive elasticity modulus of the resin roll 1. As a result, elastic deformation at the time of nipping will not work, which is not preferable in view of roll characteristics.

Then, such deterioration of the characteristics can be prevented by making the orientation direction of the fiber material mostly face to the peripheral direction or the axial direction of the resin roll 1. Furthermore, the crack in the resin roll 1 can be prevented from generating.

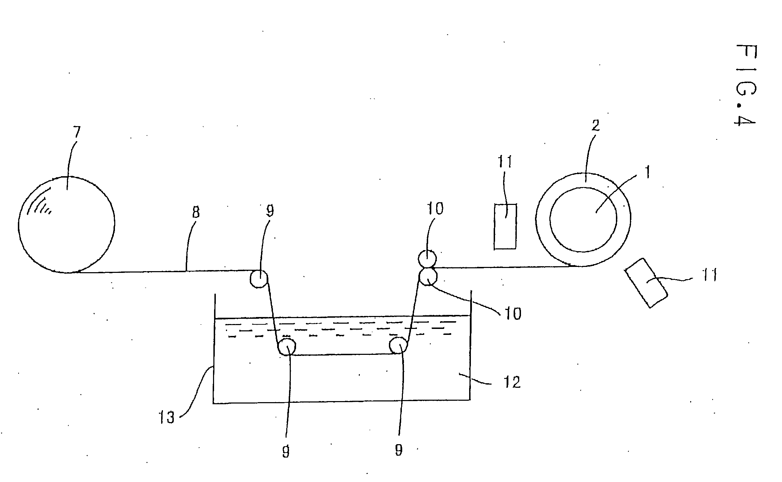

Then, a manufacturing method of the fiber-reinforced resin roll 1 according to the present invention will be described with reference to Fig. 4.

First, a peripheral surface of the roll core 2 is made rough by sand blast and the under winding layer 3 which is 3mm in thickness is formed around the peripheral surface of the roll core 2. The under winding layer 3 is formed by winding a glass roving impregnated with epoxy resin liquid laced with silica powder by 20wt% to be 1mm in thickness around the roll core 2 and then, winding a glass-cloth tape impregnated with the same epoxy resin liquid to be 2mm in thickness around the periphery of the glass roving.

Then, as shown in Fig. 4, the covering layer 4 is formed by impregnating glass paper (Oribest Co., Ltd. SYS-041) 8 in which glass fibers are combined by an epoxy resin binder, with an epoxy resin liquid 12 laced with the same silica powder by 20wt% and winding it around the under winding layer 3.

For example, the glass paper 8 is 63.7N/15mm in tensile strength in the longitudinal direction, 40.7g/m² in basic weight, 50mm in width and 0.34mm in thickness.

As shown in Fig. 4, the glass paper 8 is sequentially drawn out of a scroll 7 and the glass paper 8 is soaked in the epoxy resin liquid 12 in a resin bath 13 through a tension bar 9. The epoxy resin 12 in the resin bath 13 is about 1500mPa · s to 4000mPa · s in viscosity.

Then, the glass paper 8 passes through the resin bath 13 and an impregnated amount of the epoxy resin 12 thereof is adjusted by two squeeze bars 10. Then, it is wound around the lower winding layer 3 on the roll core 2 rotating at predetermined speed.

At this time, the glass paper 8 is partially heated by a heating apparatus 11 such as a hot air processing machine at about 600°C at two points, that is, the point just before it is wound around the roll core 2 and the point while it is wound around the same. Thus, the viscosity of the epoxy resin liquid 12 in the glass paper 8 is instantaneously lowered such that the epoxy resin liquid 12 is fully impregnated into the glass paper 8 and air is removed from the glass paper 8 impregnated with the epoxy resin 12.

At this time, as shown in Fig. 4, it is preferable that the resin is directly heated from both sides of the glass paper 8. Thus, the viscosity of the resin liquid can be effectively lowered. The viscosity of the epoxy resin liquid 12 becomes about 300mPa · s to 1000mPa · s the moment it is heated.

In addition, as the heating apparatus 11, other than the above hot air processing machine which blows hot air to the glass paper 8, a heater can be used.

The glass paper 8 is wound around the roll core 2 such that it moves in the axial direction of the roll core 2 by a half of the width of the glass paper 8 while the roll core 2 make a round, and movement from one end to the other end of the glass paper 8 in the axial direction is repeated 12 times. Thus, the covering layer 4 can be formed to be about 7mm in thickness.

Then, a laminated cylinder comprising the roll core 2, the under winding layer 3 and the covering layer 4 is heated at 180°C to harden the epoxy resin. Then, its peripheral surface is cut and ground so that the fiber-reinforced resin roll 1 which is 5200mm in length and 431mm in diameter is made.

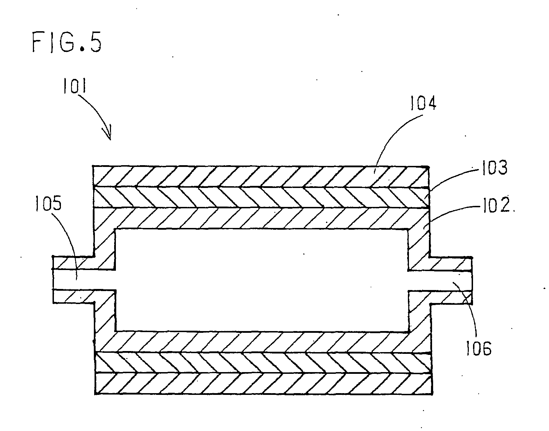

Fig. 5 is a sectional view showing a fiber-reinforced resin roll 101 according to a second embodiment of the present invention. The fiber-reinforced resin roll 101 according to the second embodiment is different from the fiber-reinforced resin roll 1 according to the first embodiment of the present invention in that the roll core 102 can be heated or cooled from the inside. The under winding layer 103, the covering layer 104 and the manufacturing methods of the fiber-reinforced resin roll 101 other than that are the same as the under winding layer 3, the covering layer 4 and the manufacturing methods of the fiber-reinforced resin roll 1 according to the first embodiment. The roll core 102 has a hollow inside and heat medium such as water, oil, vapor or the like can be charged or discharged from charge/discharge parts 105 and 106 provided at an axis part of both ends of the roll core 102.

Although the present invention has been described and illustrated with reference to the drawings, it is clearly understood that the same is by way of illustration and example only. It is also to be understood that the various kinds of modifications and variations are possible within the spirit and the scope of the present invention.

### Industrial Applicability

The present invention can be advantageously used in a fiber-reinforced resin roll which is used in various kinds of industries such as paper manufacturing, iron manufacturing, a film, fibers or the like.

## Claims

1. A fiber-reinforced resin roll comprising a roll core (2), and
a covering layer (4) formed around a periphery of said roll core (2) directly or through an under winding layer (3) interposed therebetween and formed of a thermosetting resin including a fiber material (6) mainly composed of inorganic fibers, wherein said fiber material (6) is uniformly dispersed in said covering layer (4).

2. A fiber-reinforced resin roll according to claim 1, wherein said fiber material (6) in said covering layer (4) is 2wt% or more and 40wt% or less in density.

3. Afiber-reinforced resin roll according to claim 1, wherein said covering layer (4) is formed by winding a tape-shaped nonwoven fiber complex in which said fiber material (6) is coupled by a binder, impregnated with a thermosetting resin material.

4. A fiber-reinforced resin roll according to claim 1, wherein said fiber material (6) is oriented in a surface direction of the fiber-reinforced resin roll.

5. A fiber-reinforced resin roll according to claim 1, wherein a total thickness of said under winding layer (3) and the covering layer (4) is 3mm to 15mm.

6. A fiber-reinforced resin roll according to claim 1, wherein said roll core (2) comprises heating and/or cooling means for enabling heating and/or cooling from an inside.

7. A method of manufacturing a fiber-reinforced resin roll comprising:
a step of impregnating a tape-shaped nonwoven fiber complex including a fiber material (6) with a liquid thermosetting resin material while the nonwoven fiber complex is sequentially transferred,
a step of winding said nonwoven fiber complex around an outer periphery of a roll core (2) directly or through an under winding layer interposed therebetween, and
a step of hardening said thermosetting resin material.

8. A method of manufacturing a fiber-reinforced resin roll according to claim 7, wherein said nonwoven fiber complex is formed by coupling said fiber material (6) by a binder.

9. A method of manufacturing a fiber-reinforced resin roll according to claim 7, wherein said fiber material (6) mainly includes inorganic fibers.

10. A method of manufacturing a fiber-reinforced resin roll according to claim 7, further comprising a step of lowering viscosity of the thermosetting resin material impregnated in the nonwoven fiber complex while said nonwoven fiber complex impregnated with said thermosetting resin material is transferred and/or while said nonwoven fiber complex impregnated with said thermosetting resin material is wound around said roll core (2).

11. A method of manufacturing a fiber-reinforced resin roll according to claim 7, wherein said nonwoven fiber complex has tensile strength of 50N/15mm or more in the longitudinal direction.

12. A method of manufacturing a fiber-reinforced resin roll according to claim 7, wherein said nonwoven fiber complex has basic weight of 30g/m² or more and 100g/m² or less.

13. A method of manufacturing a fiber-reinforced resin roll according to claim 7, wherein said nonwoven fiber complex is formed of paper made of said fiber material.

14. A method of manufacturing a fiber-reinforced resin roll according to claim 7, wherein said fiber material is glass fibers.

15. A method of manufacturing a fiber-reinforced resin roll according to claim 7, wherein said thermosetting resin contains an inorganic filler.

16. A method of manufacturing a fiber-reinforced resin roll according to claim 15, wherein said inorganic filler contains silica powder.

17. A method of manufacturing a fiber-reinforced resin roll according to claim 7, wherein said thermosetting resin is an epoxy resin.
